# EUROPEAN PATENT APPLICATION

(11) **EP 3 989 597 A1**
(43) Date of publication of application: **27.04.2022**
(21) Application number: 20827838.2
(22) Date of filing: 25.03.2020
(51) Int. Cl.: H04Q 11/00, H04B 10/07, H04L 12/24

(54) **OPTICAL NETWORK UNIT (ONU) POWER DOWN ALARM METHOD AND APPARATUS, DEVICE AND STORAGE MEDIUM**

(30) Priority: 19.06.2019 CN 201910541961
(71) Applicant: ZTE Corporation, Shenzhen, Guangdong 518057 (CN)
(72) Inventor: QIU, Yanbin, Shenzhen, Guangdong 518057 (CN); CAI, Liyong, Shenzhen, Guangdong 518057 (CN)
(74) Representative: Petraz, Gilberto Luigi
(86) International application number: PCT/CN2020/081203
(87) International publication number: WO 2020/253299

(57) **Abstract**

Provided in the present disclosure is an optical network unit (ONU) power down alarm method. The method comprises: after an optical network unit (ONU) is started, monitoring whether a power down alarm signal is generated; performing timing when it is monitored that a power down alarm signal is generated, and reporting the power down alarm signal to an optical line terminal (OLT); stopping reporting after a first preset time elapses, and disabling the sending and receiving of the ONU. Further provided in the present disclosure is an ONU power down alarm apparatus, a device and a storage medium.

## Description

### CROSS-REFERENCE TO RELATED APPLICATIONS

This application claims the priority to Chinese Patent Application CN 201910541961.6, entitled "Optical network unit, ONU, power down alarm method and apparatus, device and storage medium" and filed on June 19, 2019, the entirety of which is incorporated herein by reference.

### FIELD OF THE INVENTION

The present disclosure relates to the field of communication technology, and in particular to an optical network unit (ONU) power down alarm method, apparatus, device, and storage medium.

### BACKGROUND OF THE INVENTION

With development of Passive Optical Network (PON) technology, Fiber to the Home (FTTH) has been applied on a large scale, and its terminal product, i.e., Optical Network Units (ONU), go through a huge delivering volume. In order to facilitate remote management of various information of the ONUs, the ONUs need to report in real time various alarm messages to an Optical Line Terminal (referred to as OLT for short) of central office equipment, a power down alarm belonging to one of these messages. An ONU sets a voltage threshold for reporting a power down alarm message. When it is detected that a voltage is lower than the voltage threshold, the ONU will report a power down alarm message to the OLT to inform the OLT of its power-down and shutdown state.

However, the traditional power down alarm method fails to fully consider interference of many abnormal situations to power down alarms in practical use. In practical use, the ONUs report abnormal power down alarm signals to the OLT, resulting in occurrences of abnormal, such as false light emission, statistics overflow of power down alarms, etc., which cause interference to an entire PON network.

### SUMMARY OF THE INVENTION

The present disclosure provides an optical network unit (ONU) power down alarm method, apparatus, device, and storage medium, to solve the problem that an existing ONU power down alarm method is incapable of handling an abnormal power down alarm signal so that interference is caused to an entire PON network.

An embodiment of the present disclosure provides an optical network unit (ONU) power down alarm method, including: after an ONU is activated, monitoring whether a power down alarm signal is generated; performing timing when it is detected that there is a power down alarm signal generated, and reporting the power down alarm signal to an optical line terminal; and terminating reporting when a first preset time has elapsed, and disabling transmission and reception of the ONU

In addition, an embodiment of the present disclosure further provides an optical network unit (ONU) power down alarm apparatus, including: a signal monitoring module, configured to monitor whether a power down alarm signal is generated after an ONU is activated; a signal reporting module, configured to perform timing when it is detected that there is a power down alarm generated, and to report the power down alarm signal to an optical line terminal (OLT); and a disabling module, configured to terminate reporting when a first preset time has elapsed, and to disable transmission and reception of the ONU.

In addition, an embodiment of the present disclosure further provides an optical network unit (ONU) power down alarm device, including a processor, a memory, and a computer program which is stored on the memory and executable by the processor, where the computer program, when being executed by the processor, implements steps of the ONU power down alarm method as described above.

In addition, an embodiment of the present disclosure further provides a storage medium on which a computer program is stored, where the computer program, when being executed by a processor, implements steps of the ONU power down alarm method as described above.

### BRIEF DESCRIPTION OF THE DRAWINGS

Fig. 1 is a schematic diagram of a hardware structure of an optical network unit (ONU) power down alarm device involved in an embodiment of the present disclosure;
Fig. 2 is a schematic flowchart of a first embodiment of an optical network unit (ONU) power down alarm method in the present disclosure; and
Fig. 3 is a schematic flowchart of a second embodiment of an optical network unit (ONU) power down alarm method in the present disclosure.

Implementations of the objective, functional characteristics and advantages of the present disclosure will be further described in conjunction with the embodiments and with reference to the accompanying drawings.

### DETAILED DESCRIPTION OF THE EMBODIMENTS

It should be understood that the specific embodiments described herein are only used to explain the present disclosure, but not constitute limitation to the present disclosure.

An optical network unit (ONU) power down alarm method involved in this embodiment of the present disclosure is mainly applied to an ONU power down alarm device. Said ONU power down alarm device can be the ONU device itself (that is, the ONU integrates functions such as power down detection and alarming), and can also be a separate device connected to the ONU device and having functions such as power down detection and alarming.

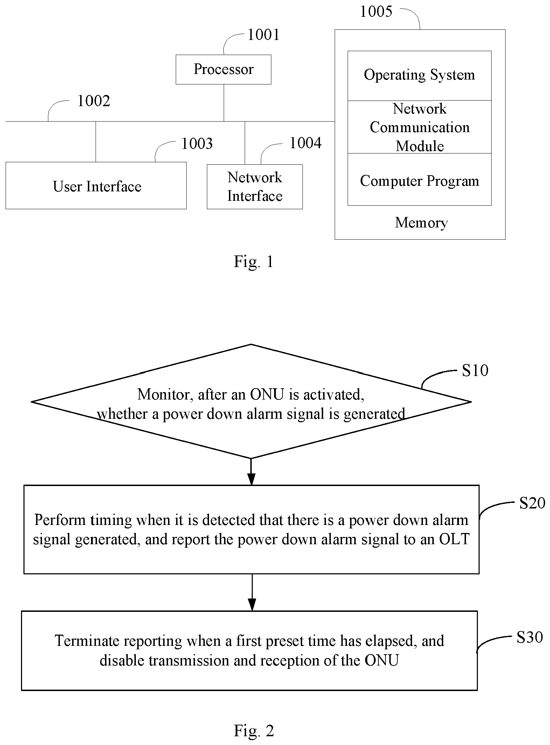

Referring to Fig. 1, there is shown a schematic diagram of a hardware structure of an ONU power down alarm device involved in an embodiment of the disclosure. The ONU power down alarm device in the embodiment of the present disclosure may include a processor 1001 (for example, a central processing unit, CPU), a communication bus 1002, a user interface 1003, a network interface 1004, and a memory 1005. The communication bus 1002 is configured to implement connection and communication among these components. The user interface 1003 may include a display, and an input unit such as a keyboard. The network interface 1004 in an embodiment may include a standard wired interface, a wireless interface (e.g., Wireless-Fidelity, WI-FI interface). The memory 1005 may be a high-speed random access memory (RAM) or a stable memory (non-volatile memory), such as a disk memory. In an embodiment, the memory 1005 may also be a storage device independent of the aforementioned processor 1001. Those skilled in the art can understand that the hardware structure shown in Fig. 1 does not constitute a limitation to the present disclosure, and it may include more or fewer components than those shown in the figure, combine certain components, or include different component arrangement.

With continued reference to Fig. 1, the memory 1005 as a computer-readable storage medium in Fig. 1 may include an operating system, a network communication module, and a computer program. In Fig. 1, the network communication module is mainly configured to connect an optical line terminal (OLT for short) for data communication with the OLT. The processor 1001 may call the computer program stored in the memory 1005 and implement the following steps: after the ONU is activated, monitoring whether a power down alarm signal is generated; performing timing when it is detected that there is a power down alarm signal generated, and reporting the power down alarm signal to the OLT; and terminating reporting when a first preset time has elapsed, and disabling transmission and reception of the ONU

In an embodiment, the step of performing timing when it is detected that there is a power down alarm signal generated, and reporting the power down alarm signal to the OLT includes that: timing is performed when it is detected that the power down alarm signal is generated, and the power down alarm signal is buffered to wait for a usage time of bandwidth corresponding to the ONU; and the power down alarm signal is reported to the OLT when it is within the usage time of bandwidth.

In an embodiment, the processor 1001 may also call a computer program stored in the memory 1005 and implement the following steps: when a second preset time has elapsed, re-enabling transmission and reception of the ONU, the second preset time being greater than the first preset time.

In an embodiment, the ONU includes a capacitor, and a theoretical discharge time of the capacitor is greater than the first preset time and less than the second preset time.

In an embodiment, the processor 1001 may also call a computer program stored in the memory 1005 and implement the following steps: statistically metering actual discharge times of the capacitor in a first preset cycle, and calculating an average discharge time according to the actual discharge times; adjusting the first preset time and the second preset time according to the average discharge time and preset rules so that the average discharge time is greater than the adjusted first preset time and less than the adjusted second preset time.

In an embodiment, the processor 1001 may also call a computer program stored in the memory 1005 and implement the following steps: statistically counting the number of times of power downs of the ONU in a second preset cycle; and when the number of times of power downs is larger than a threshold, writing corresponding severe power down information to a first preset log.

In an embodiment, the processor 1001 may also call a computer program stored in the memory 1005 and implement the following steps: statistically metering generation times of power down alarm signals of the ONU in a third preset cycle; and determining a high-frequency power down period according to analysis on the generation times, and writing corresponding high-frequency power down information to a second preset log.

Based on the above-mentioned hardware structure, various embodiments of the ONU power down alarm method of the present disclosure are provided.

In an embodiment of the present disclosure, it is provided an optical network unit (ONU) power down alarm method.

Referring to Fig. 2, there is shown a schematic flowchart of a first embodiment of the optical network unit power down alarm method of the preset disclosure.

In this embodiment, the ONU power down alarm method includes the following steps S10 to S30.

In step S10, after the optical network unit is activated, whether a power down alarm signal is generated is monitored.

With development of Passive Optical Network (PON) technology, Fiber to the Home (FTTH) has been applied on a large scale, and its terminal product, i.e., Optical Network Units (ONU), go through a huge delivering volume. In order to facilitate remote management of various information of the ONUs, the ONUs need to report in real time various alarm messages to an Optical Line Terminal (referred to as OLT for short) of central office equipment, a power down alarm belonging to one of these messages. An ONU sets a voltage threshold for reporting a power down alarm message. When it is detected that a voltage is lower than the voltage threshold, the ONU will report a power down alarm message to the OLT to inform the OLT of its power-down and shutdown state. However, the traditional power down alarm method fails to fully consider interference of many abnormal situations to the power down alarms in practical use. In practical use, the ONUs report abnormal power down alarm signals to the OLT, resulting in occurrences of abnormal, such as false light emission, statistics overflow of power down alarms, etc., which cause interference to an entire PON network. In this regard, this embodiment provides an ONU power down alarm method. By controlling a reporting time-length of power down alarms, a power down alarm mutation signal happened at the end of discharging of a single board (a capacitor) is effectively filtered out so as to avoid false light emission caused by abnormal power down alarm signals; at the same time, by controlling the reporting time-length of the power down alarms, it can also avoid continuous reporting of power down alarm information by the ONUs so as to prevent the OLT from statistics overflow of the power down alarms caused by the continuous reporting of power down alarm information, and prevent the PON network from impact. In addition, by disabling transmission and reception after a certain period of time, the ONUs is forced to go offline, and the ONU can be kept synchronized with a registration status in the OLT, so that a problem caused by abnormal power down alarm signals that the ONU is asynchronous with the registration status in the OLT is avoided.

The ONU power down alarm method in this embodiment is mainly applied to an ONU power down alarm device. Said ONU power down alarm device is described by taking an ONU itself as an example. In this embodiment, after being activated, the ONU will monitor its own power down state to monitor whether a power down alarm signal is generate. Monitoring of the power down alarm signal can be performed by a manner of interruption or by means of a timer. For the power down alarm signal, a voltage threshold value may be set by the ONU, and when a voltage is detected to be lower than the voltage threshold value, a corresponding power down alarm signal is generated.

In step S20, timing is performed when it is detected that a power down alarm signal is generated, and the power down alarm signal is reported to the optical line terminal.

In this embodiment, when it is detected that a power down alarm signal is generated, it thus can be considered that the current ONU is in a power down state. At this time, the ONU will start timing (for example, a preset timer can be started), and the power down alarm signal is reported to the OLT communicatively connected with the ONU, so that the OLT learns from the power down alarm signal that the ONU is in a power down state, and then performs corresponding processing.

It should be noted that, in practice, the ONU and the OLT may adopt time-division multiplexing technology for communication. Therefore, the power down alarm signal of the ONU is reported only when bandwidth allocated by the OLT arrives. In an embodiment, the step S20 may proceed as follows.

When it is detected that a power down alarm signal is generated, timing is performed, and the power down alarm signal is buffered to wait for a usage time of bandwidth corresponding to the ONU. When it is detected that the power down alarm signal is generated in the ONU, it thus can be considered that the current ONU is in a power down state, and the ONU will start timing at this time (for example, it can start a preset time meter or a timer). At the same time, since the ONU and the OLT adopt time division multiplexing technology for communication, the ONU needs to wait for performing reporting until the allocated bandwidth by the OLT arrives. As a result, the ONU may first buffer the power down alarm signal, and then continuously monitors OLT bandwidth information to wait for arriving of a usage time of bandwidth corresponding to the ONU

When it is within the usage time of bandwidth, the power down alarm signal is reported to the optical line terminal. When it is within the usage time of bandwidth corresponding to the ONU (or when broadband information issued by the OLT is received), the ONU can use the bandwidth (and related network resources) to report the power down alarm signal to the OLT, so that the OLT can learns from the power down alarm signal that the ONU is in a power down state and then performs corresponding processing. Through the above method, on the basis of achievement of transmission of multiple signals via one same channel through time division multiplexing, the power down alarm signal generated by the ONU can be ensured to be reported to the OLT normally, so that the OLT learns from the power down alarm signal that the ONU is in a power down state and then performs corresponding processing.

In step S30, reporting is terminated when a first preset time has elapsed, and transmission and reception of the ONU are disabled.

In this embodiment, while reporting the power down alarm signal to the OLT, the ONU further detects duration from the current moment to a time when generation of the power down alarm signal is monitored. When a first preset time T1 has elapsed, the ONU terminates reporting of the power down alarm signal, and disables reception and transmission. The first preset time T1 is short than a discharge time of the capacitor of the ONU, that is, with respect to setting of the first preset time T1, it is necessary to ensure that the ONU can have sufficient time to complete reporting of a power down alarm signal and can also effectively eliminate last few power down alarm signals caused by tailing of the capacitor. For example, a timer is activated to start timing when it is detected that a power down alarm signal is generated, and the power down alarm signal is reported to the OLT (or the power down alarm signal is waiting to be reported to the OLT until a usage time of bandwidth arrives), then reporting is terminated when the timer indicates that the first preset time T1 has elapsed, and then transmission and reception of the ONU are disabled. It should be noted that, generally speaking, when the capacitor is nearly discharged out, the last power down alarm signal often has signal mutation, i.e., false light emission due to tailing of the capacitor. Through the above method, transmission and reception of the ONU are disabled when the first preset time T1 has elapsed since generation of a power down alarm signal by the ONU, so that not only normal reporting of the power down alarm signals within the first preset time T1 can be ensured, but also mutation of a power down alarm signal occurring at the end of discharge of a single board (a capacitor) can be effectively filtered out by controlling a reporting time-length of the power down alarm signals, thereby avoiding false light emission caused by the abnormal power down alarm signal. Furthermore, in practice, abnormal of capacitor may cause excessive discharge time during the ONU's power down alarming process, which causes too many power down alarm signals reported by the ONU, leads to statistics overflow of power down alarm signals in the OLT, and affects the OL's normal alarm statistics function. In this embodiment, by controlling a reporting time-length of power down alarms as described above, it can further avoid a problem of continuous reporting of power down alarm information by the ONU so as to prevent the OLT from statistics overflow of power down alarms caused by the continuous reporting of power down alarm information and prevent the PON network form impact. In addition, in a traditional power down alarm method, when a power down occurs, it is often handled by resetting the ONU. Rather, in this embodiment, by disabling transmission and reception after a certain period of time, the ONU is forced to go offline and also kept to be synchronized with a registration status in the OLT, so as to avoid a problem caused by abnormal power down alarm signals that the ONU is asynchronous with the registration status in the OLT. Compared with the "resetting", it is more convenient and improves processing efficiency.

In this embodiment, after the ONU is activated, whether there is a power down alarm signal is monitored; timing is performed when it is detected that there is a power down alarm signal generated, and the power down alarm signal is reported to the OLT; reporting is terminated when a first preset time has elapsed, and transmission and reception of the ONU are disabled. Through the above method, by controlling a reporting time-length of power down alarms, mutation of a power down alarm signal at the end of discharge of a single board (a capacitor) is effectively filtered out, thereby avoiding false light emission caused by the abnormal power down alarm signal. At the same time, by controlling the reporting time-length of power down alarms, it can also avoid continuous reporting of the power down alarm information by the ONU so as to prevent the OLT from statistics overflow of power down alarms caused by the continuous reporting of the power down alarm information and prevent the PON network from impact. In addition, by disabling transmission and reception after a certain period of time, the ONU is forced to go offline and also kept to be synchronized with a registration status in the OLT, so as to avoid a problem caused by the abnormal power down alarm signal that the ONU is asynchronous with the registration status in the OLT.

Based on the embodiment shown in Fig. 2 above, a second embodiment of the ONU power down alarm method of the present disclosure is provided.

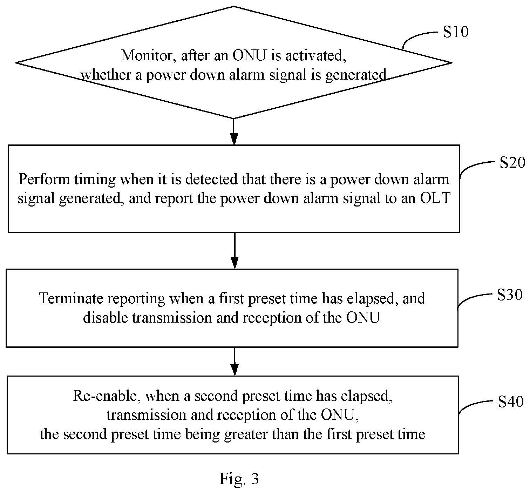

Referring to Fig. 3, there is shown a schematic flowchart of the second embodiment of the ONU power down alarm method of the present disclosure.

In this embodiment, after the step S30, the method further includes the following step S40.

In step S40, when a second preset time has elapsed, transmission and reception of the ONU are re-enabled, the second preset time being greater than the first preset time.

Considering that generated power down alarm signals might be caused by voltage instability, such power down alarm signals are thereby considered as false power down alarm signals. For these false power down alarm signals, the ONU and the OLT cannot make direct determination, but merely adopt "resetting" processing. In this regard, in this embodiment, transmission and reception of the ONU may be disabled when a first preset time T1 has been elapsed so as to force the ONU to go offline, and then the transmission and reception of the ONU may be re-enabled once again when a second preset time T2 has been elapsed so as to allow the ONU to re-register and go online, the second preset time T2 being greater than the first preset time T1. Through the above method, with respect to false power down alarms, a segment control method by a timer is adopted, so that resetting of the ONU is not required, a time-length of service recovery is short, user service recovery is rapid, and user experience is improved.

In an embodiment, the ONU includes a capacitor. A theoretical discharge time T0 of the capacitor (a time required for the capacitor to discharge out in an ideal state) should be between the first preset time T1 and the second preset time T2, that is, T1< T0<T2. Through the above method, it can ensure that, before T1, the power down alarm signals are normally reported, and that transmission and reception are disabled in an unstable discharge phase of the capacitor (a phase in which the capacitor is nearly discharged out) and the transmission and reception are re-enabled again after discharge of the capacitor is completed.

In another embodiment, in practice, with passing of time and continuous use, an actual discharge time of the capacitor may be inconsistent with the theoretical discharge time T0. For this reason, in this embodiment, the first preset time T1 and/or the second preset time T2 may be dynamically adjusted according to the actual discharge condition of the capacitor to ensure that the capacitor discharge time is between the first preset time T1 and the second preset time T2. In an implementation, the ONU power down alarm method of this embodiment may further proceed as follows.

Actual discharge time-lengths of the capacitor within a first preset cycle are statistically metered, and an average discharge time is calculated according to the actual discharge time-lengths. Specifically, the ONU records actual discharge of the capacitor during use, and then statistically meters actual discharge time-lengths in a certain preset cycle; according to the actual discharge time-lengths of the capacitor in the cycle, an average discharge time T0' of the capacitor may be calculated, which can reflect actual discharge capacity of the capacitor.

The first preset time and the second preset time are adjusted according to the average discharge time and preset rules so that the average discharge time is greater than the adjusted first preset time and less than the adjusted second preset time. Specifically, when the average discharge time T0' is obtained, the first preset time T1 and the second preset time T2 can be adjusted according to the average discharge time T0' so that the average discharge time T0' is greater than the adjusted first preset time and less than the adjusted second preset time. Of course, in practice, it may be necessary to adjust only the first preset time or only the second preset time. In addition, adjustment rules can also be configured. For example, for a time interval ΔT1 between the average discharge time and the adjusted first preset time and a time interval ΔT2 between the average discharge time and the adjusted second preset time, the two should be identical, that is, ΔT1=ΔT2; of course, other forms can also be configured. Through the above method, dynamic adjustment of the first preset time and the second preset time can be achieved so as to ensure that the actual discharge time of the capacitor is between the first preset time and the second preset time.

Based on the embodiments shown in Fig. 2 or 3, a third embodiment of the ONU power down alarm method of the present disclosure is provided.

In this embodiment, the ONU power down alarm method may further proceed as follows.

The number of times of power downs of the ONU within a second preset cycle is statistically counted. In this embodiment, in order to facilitate a user to perform statistics on power down situation of the ONU, relevant statistics may also be performed on the number of times of power downs. In an embodiment, the ONU may be provided with a counter, and the counter is incremented by 1 each time that generation of a power down signal is detected, so that the number of times of power downs of the ONU in a certain cycle is statistically counted. Of course, a specific time-length of the cycle may be configured according to practical situation, such as a certain week, a certain month, etc.

When the number of times of power downs is greater than a preset threshold, corresponding severe power down information is written into a first preset log. In this embodiment, a threshold may further be preset in the ONU, and then the number of times of power downs in the cycle is compared with the threshold to determine whether the number of times of power downs in the cycle is greater than the threshold; if so, then it is considered that the ONU is in a severe power down case in this cycle. At this time, the ONU may write a corresponding severe power down information into the preset log file. The severe power down information may include a cycle start time, the number of times of power downs, and a start time of each power down, etc. Through the above method, the power down situation is recorded to facilitate a user to perform statistics and processing on the power down situation of the ONU

In an embodiment, statistics may also be performed on generation times of power downs in this embodiment, so as to determine a high-frequency power down period. In an embodiment, the ONU power down alarm method may further proceed as follows.

Generation times of the power down alarm signals of the ONU within a third preset cycle are statistically metered. Specifically, when the ONU monitors whether a power down alarm signal is generated, if a power down alarm signal is generated, a generation time of the power down alarm signal can also be recorded, and then statistics of generation times of all power down alarm signals in a certain cycle is obtained. Duration of the cycle may be configured according to practical situation, for example, one day.

A high-frequency power down period is determined according to analysis on the generation times, and corresponding high-frequency power down information is written into a second preset log. Specifically, when the generation times of all power down alarm signals in a certain cycle are obtained, a high-frequency power down period can be determined based on analysis on these generation times. Specific duration of each period may be configured according to actual situation, for example, each period being of one hour, that is, it is analyzed which hour or hours in a day serve as a high-frequency power down period. Of course, the number of high-frequency power down periods may be configured according to actual situation, for example, a period that has the most number of times of power downs may be determined as a high-frequency power down period, or two periods that have the first two most number of times of power downs may be determined as high-frequency power down periods, or a period in which the number of times of power downs exceeds another threshold is determined as a high-frequency power down period. When the high-frequency power down period is determined, the ONU may write corresponding high-frequency power down information into a preset log file. The high-frequency power down information includes a start time of the period, the number of times of power down, a start time of each power down, etc. Through the above method, the power down situation is recorded to facilitate a user to perform statistics and processing on the power down situation of the ONU

In addition, an embodiment of the present disclosure also provides an optical network unit (ONU) power down alarm apparatus of the present disclosure.

In this embodiment, the ONU power down alarm apparatus includes a signal monitoring module, which is configured to monitor whether a power down alarm signal is generated after the ONU is activated; a signal reporting module, configured to perform timing when it is detected that there is a power down alarm generated, and to report the power down alarm signal to an optical line terminal (OLT); and a disabling module, which is configured to terminate reporting when a first preset time has elapsed, and to disable transmission and reception of the ONU.

In this case, virtual function modules of the ONU power down alarm apparatus, each of which is stored in the memory 1005 of the ONU power down alarm device shown in Fig. 1, may be configured to implement all functions of a computer program. When various modules are executed by the processor 1001, a function of power down alarming of the ONU can be realized.

In an embodiment, the signal reporting module includes: a signal buffer unit, which is configured to perform timing when it is detected that a power down alarm signal is generated, and to buffer the power down alarm signal to wait for a use time of bandwidth corresponding to the ONU; and a signal reporting unit, which is configured to report the power down alarm signal to the OLT when it is in the use time of bandwidth.

In an embodiment, the ONU power down alarm apparatus further includes an enabling module, which is configured to re-enable transmission and reception of the ONU when a second preset time has elapsed, the second preset time being greater than the first preset time.

In an embodiment, the ONU includes a capacitor, and a theoretical discharge time of the capacitor is greater than the first preset time and less than the second preset time.

In an embodiment, the ONU power down alarm apparatus further includes a time calculation module, which is configured to statistically meter actual discharge time-lengths of the capacitor in a first preset cycle, and to calculate an average discharge time according to the actual discharge time-lengths; and a time adjustment module, which is configured to adjust the first preset time and the second preset time according to the average discharge time and preset rules, so that the average discharge time is greater than the adjusted first preset time and is less than the adjusted second preset time.

In an embodiment, the ONU power down alarm apparatus further includes a first counting module, which is configured to statistically count the number of times of power downs of the ONU in a second preset cycle; and a first writing module, which is configured to write corresponding severe power down information into a first preset log when the number of times of power downs is greater than a preset threshold.

In an embodiment, the ONU power down alarm apparatus further includes a second counting module, which is configured to statistically meter generation times of power down alarm signals of the ONU in a third preset cycle; and a second writing module, which is configured to determine a high-frequency power down period according to analysis on the generation times, and to write corresponding high-frequency power down information into a second preset log.

In this case, implementation of the function of each module in the ONU power down alarm apparatus corresponds to the steps in the above-mentioned embodiments of the ONU power down alarm method, and the function and the implementation process will not be described any further here.

In addition, an embodiment of the present disclosure further provides a storage medium.

A computer program is stored on the storage medium of the present disclosure, the computer program, when being executed by a processor, implements the steps of the ONU power down alarm method as described above.

For the method that is implemented when the computer program is executed, reference may be made to the various embodiments of the ONU power down alarm method of the present disclosure, which will not be described any further here.

In the embodiments of the present disclosure, after the ONU is activated, whether there is a power down alarm signal is monitored; timing is performed when it is detected that there is a power down alarm signal generated, and the power down alarm signal is reported to the OLT; reporting is terminated when a first preset time has elapsed, and transmission and reception of the ONU are disabled. Through the above method, by controlling a reporting time-length of power down alarms, mutation of a power down alarm signal at the end of discharge of a single board (a capacitor) is effectively filtered out, thereby avoiding false light emission caused by the abnormal power down alarm signal. At the same time, by controlling the reporting time-length of power down alarms, it can also avoid continuous reporting of the power down alarm information by the ONU so as to prevent the OLT from statistics overflow of power down alarm caused by the continuous reporting of the power down alarm information and prevent the PON network from impact. In addition, by disabling transmission and reception after a certain period of time, the ONU is forced to go offline and also kept to be synchronized with a registration status in the OLT, so as to avoid a problem caused by the abnormal power down alarm signal that the ONU is asynchronous with the registration status in the OLT.

It should be noted that, it is intended to cover a non-exclusive inclusion by the term "include", "including", or any other variation herein. Therefore, a process, a method, an article, or a device that includes a series of elements not only includes the series of elements but also includes other elements that are not listed explicitly or elements that are inherent to such a process, a method, an article, or a device. Without further limitations, when an element is defined by a wording of "include a ...", it does not exclude presence of a same element in the process, the method, the article, or the device that includes this element.

The serial numbers of the foregoing embodiments of the present disclosure are for descriptive purposes only, but not represent the advantages and disadvantages of the embodiments.

Through the description of the above embodiments, those skilled in the art may be clearly understand that the methods according to the above embodiments can be implemented by means of software plus necessary general hardware platforms, and of course may also be implemented by hardware, but the former is better in many cases. Based on this understanding, the technical solution of the present disclosure essentially, or the part that contributes to the prior art, can be embodied in the form of a software product. The computer software product is stored in a storage medium as described above (such as ROM/RAM, magnetic disk, optical disk), and includes several instructions to cause a terminal device (which may be a mobile phone, a computer, a server, an air conditioner, or a network device, etc.) to execute the method described in the various embodiments of the present disclosure.

The above are only preferred embodiments of the present disclosure, and do not construct limitation to the scope of the present disclosure. Any equivalent structure or equivalent process transformation made by using the contents of the description and drawings of the present disclosure, or those directly or indirectly applied to other related technical fields, is equally included in the scope of patent protection of this disclosure.

## Claims

1. An optical network unit, ONU, power down alarm method, **characterized in that**, the ONU power down alarm method comprises:
monitoring, after an ONU is activated, whether a power down alarm signal is generated;
performing timing when it is detected that there is a power down alarm signal generated, and reporting the power down alarm signal to an optical line terminal, OLT; and
terminating reporting when a first preset time has elapsed, and disabling transmission and reception of the ONU

2. The ONU power down alarm method according to claim 1, **characterized in that**, performing timing when it is detected that there is a power down alarm signal generated, and reporting the power down alarm signal to the optical line terminal, OLT, comprises:
performing timing when the power down alarm signal is generated, and buffering the power down alarm signal to wait for a usage time of bandwidth corresponding to the ONU; and
reporting, when it is within the usage time of bandwidth, the power down alarm signal to the OLT.

3. The ONU power down alarm method according to claim 1, **characterized in that**, after terminating reporting when a first preset time has elapsed and disabling transmission and reception of the ONU, the method further comprises:
re-enabling, when a second preset time has elapsed, transmission and reception of the ONU, the second preset time being greater than the first preset time.

4. The ONU power down alarm method according to claim 3, **characterized in that**, the ONU includes a capacitor, wherein a theoretical discharge time of the capacitor is greater than the first preset time and less than the second preset time.

5. The ONU power down alarm method according to claim 4, **characterized in that**, the ONU power down alarm method further comprises:
statistically metering actual discharge times of the capacitor in a first preset cycle, and calculating an average discharge time according to the actual discharge times;
adjusting the first preset time and the second preset time according to the average discharge time and preset rules so that the average discharge time is greater than the adjusted first preset time and less than the adjusted second preset time.

6. The ONU power down alarm method according to claim 1, **characterized in that**, the ONU power down alarm method further comprises:
statistically counting a number of times of power downs of the ONU in a second preset cycle; and
writing, when the number of times of power downs is larger than a threshold, corresponding severe power down information to a first preset log.

7. The ONU power down alarm method according to any one of claims 1 to 6, **characterized in that**, the ONU power down alarm method further comprises:
statistically metering generation times of power down alarm signals of the ONU in a third preset cycle; and
determining a high-frequency power down period according to analysis on the generation times, and writing corresponding high-frequency power down information into a second preset log.

8. An optical network unit, ONU, power down alarm apparatus, **characterized in that**, the ONU power down alarm apparatus comprises:
a signal monitoring module, configured to monitor whether a power down alarm signal is generated after an ONU is activated;
a signal reporting module, configured to perform timing when it is detected that there is a power down alarm generated, and to report the power down alarm signal to an optical line terminal, OLT; and
a disabling module, configured to terminate reporting when a first preset time has elapsed, and to disable transmission and reception of the ONU

9. An optical network unit, ONU, power down alarm device, **characterized in that**, the optical network unit ONU power down alarm device comprises a processor, and a memory on which a computer program executable by the processor is stored, wherein the computer program, when being executed by the processor, implements the steps of the ONU power down alarm method according to any one of claims 1 to 7.

10. A storage medium, **characterized in that**, a computer program is stored on the storage medium, wherein the computer program, when being executed by a processor, implements the steps of the ONU power down alarm method according to any one of claims 1 to 7.
